# FASCICULE DE BREVET EUROPEEN

(11) **EP 0 367 662 B1**
(45) Date de publication et mention de la délivrance du brevet: **08.12.1993**
(21) Numéro de dépôt: 89402938.8
(22) Date de dépôt: 25.10.1989
(51) Int. Cl.: B60J 1/02

(54) **Vitrage autombile destiné à être monté par collage et muni d'un fil d'extraction prémonté**
Kraftfahrzeugverglasung, deren Einbau durch Kleben vorgesehen ist und die mit einem vormontierten Ausziehdraht ausgerüstet ist
Motorcar glazing intended for being fixed by glueing and provided with a pre-assemblied extracting wire

(30) Priorité: 31.10.1988 DE 3837043
(43) Date de publication de la demande: 09.05.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Kunert, Heinz, D-5000 Köln 41 (DE); Ohlenforst, Hans, D-5100 Aachen (DE); Cornils, Gerd, D-5161 Merzenich-Girbelsrath (DE)
(74) Mandataire: de Toytot, Robert

(56) Documents cités:
- EP-A- 0 121 480
- EP-A- 0 169 348
- DE-A- 3 409 903
- DE-C- 3 722 657
- US-A- 3 707 521
- US-A- 3 779 794

## Description

L'invention a trait à un vitrage automobile préparé en vue de son collage dans la feuillure d'une baie de la carrosserie, combinant le long de son bord un cordon de profil calibré déposé par extrusion d'une masse adhésive et servant d'intercalaire entre le vitrage et le ruban de colle utilisé pour le fixer au montage, avec un fil ou cordonnet flexible de haute résistance à la rupture, disposé à l'intérieur du cordon ou à son voisinage immédiat pour trancher celui-ci dans le sens de sa largeur lors d'un démontage du vitrage.

En vue de leur montage, il est connu par la publication de brevet EP-A-0 121 480 ou DE-A-3 409 903, de munir certains vitrages automobiles d'un cordon constitué d'une masse adhésive durcissable qui, après durcissement, sert d'intercalaire ou entretoise entre le vitrage et le ruban de colle de fixation, en plaçant dans ce cordon ou à son voisinage immédiat un fil flexible qui servira à trancher le cordon s'il faut plus tard démonter le vitrage.

Comme les masses adhésives qu'on utilise de façon usuelle pour constituer le cordon sont extrêmement tenaces à l'état durci et possèdent alors une résistance au cisaillement relativement haute, des forces de traction assez importantes sont nécessaires pour trancher ce cordon ; il existe donc un risque de dépasser la résistance du fil, donc de le rompre lors de l'opération.

Les forces de traction nécessaires augmentent avec la largeur du cordon ; une réduction de cette largeur ne résoud cependant pas la difficulté car une section minimale déterminée de ruban de colle est nécessaire pour tenir le vitrage monté : si l'on emploie un cordon étroit, la colle déborde sur les côtés lorsqu'on pose le vitrage, augmentant encore la section à trancher.

Pour réduire les forces nécessaires à la découpe on a déjà proposé de placer deux fils de coupe, de sorte que chacun n'agisse que sur une partie de cette section. L'insertion ou la pose de deux fils entraîne cependant un supplément de dépense.

L'invention a pour objet de constituer un vitrage d'automobile équipé d'avance d'un cordon et d'un fil de coupe, de telle sorte que la force de traction nécessaire pour trancher le cordon à l'aide de ce fil unique se trouve réduite donc le démontage du vitrage facilité, éliminant complètement ou diminuant le danger que le fil se rompe.

Selon l'invention on y parvient en faisant correspondre à la section du ruban de colle la largeur du cordon dans la zone où porte ce ruban, pour éviter que la colle ne déborde, mais en donnant à la zone à trancher par le fil une largeur sensiblement moindre par rapport à la précédente largeur. Avantageusement la largeur de cette zone représentera au plus la moitié de celle que le cordon possède dans la portée au contact de la colle.

Selon l'invention, le fait que la zone à trancher possède une largeur relativement faible, indépendante de celle de la portée de fixation par la colle au montage, provient d'une structure adaptée du cordon et/ou d'un mode de mise en oeuvre adapté de sa liaison à la surface du vitrage. La largeur à trancher doit d'une part être suffisante pour garantir la sécurité de la fixation du vitrage dans la feuillure de la baie et d'autre part être assez faible pour permettre de monter ce vitrage sans risque de casser le fil de coupe. Il s'est avéré qu'avec les masses adhésives couramment utilisées aujourd'hui pour fabriquer le cordon, la largeur de la section à trancher par le fil de coupe atteint avantageusement 3 à 6 mm, alors qu'au contraire celle correspondant à la portée de fixation atteint 10 à 25 mm.

Il existe plusieurs façons de mettre en oeuvre le principe de l'invention.

Selon une première forme d'exécution, on donne au cordon extrudé une face de base ou portée de liaison au vitrage de largeur égale ou à peu près égale à celle de sa face supérieure, à savoir celle de la portée de collage, et des précautions appropriées font que cette face de base n'adhère à la surface du vitrage que sur une partie de sa largeur ; le fil de coupe se trouve ainsi en contact avec la surface du vitrage. Pour empêcher le cordon extrudé d'adhérer entièrement, on dépose simplement sur des portions choisies de la zone intéressée du vitrage un agent de séparation ou anti-adhésif approprié, ou bien, lorsque le dépôt préalable d'un primaire est nécessaire à l'adhérence, on ne dépose ce primaire que dans la zone prévue pour adhérer.

Selon un autre mode d'exécution de l'invention, le cordon possède une section substantiellement en forme de champignon ou de T dont seule la membrure verticale ou la semelle vient au contact de la surface du vitrage tandis que la table transversale s'arrête au-dessus en laissant un léger vide d'air. On peut alors avantageusement utiliser l'une des fentes ainsi formées pour y placer le fil de coupe après durcissement du cordon.

Fondamentalement, il est encore possible de donner à la zone d'adhérence entre le cordon et le vitrage une largeur relativement grande, par exemple égale à celle de la portée de collage, et de prévoir entre ces deux zones un étranglement du cordon de largeur substantiellement moindre, pour placer le fil de coupe à hauteur de cet étranglement.

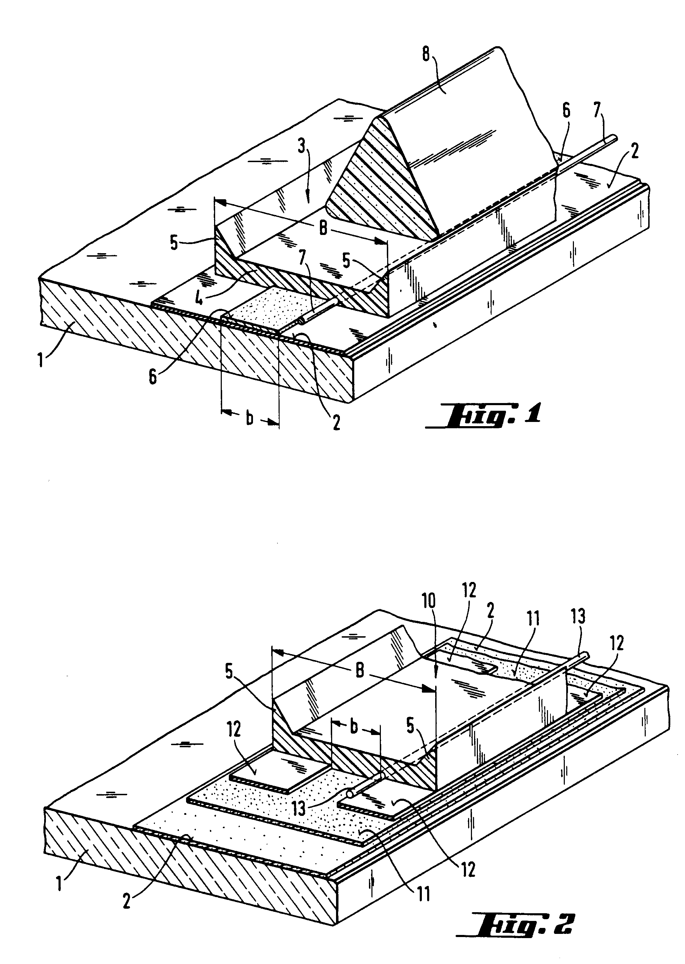

D'autres avantages et caractéristiques de l'invention ressortent de la description ci-dessous, faite en relation avec les dessins dont les figures 1 à 5 montrent différents exemples de mise en oeuvre de l'invention.

Le vitrage 1 peut fondamentalement être un vitrage de sécurité monolithique constitué d'une feuille de verre unique ou un feuilleté comprenant plusieurs feuilles de verre ; usuellement il sera feuilleté s'il s'agit d'un pare-brise, ce à quoi l'invention est principalement destinée. Sur tout le pourtour du vitrage 1, du côté tourné vers l'intérieur de l'habitacle est déposé un masque formé d'une couche 2 d'un matériau opaque à la lumière visible et l'ultra-violet ; il a pour fonction de protéger du rayonnement ultra-violet le cordon 3 et le ruban de colle de montage et de cacher à la vue la zone de collage. Usuellement le masque 2 est constitué d'une peinture à cuire noire, par exemple un émail noir cuit au cours du processus de bombage.

Le cordon 3 possède une section sensiblement en U avec une semelle médiane 4 et pour retenir la colle d'assemblage 8, des rebords latéraux 5. Sa largeur B mesure environ 20 mm. Le cordon 3 est extrudé à l'aide d'une buse calibrée appropriée et déposé directement par cette voie sur le vitrage.

Des compositions à base de polyuréthanes telles que celles décrites dans les brevets US-3 707 521 et US-3 779 794 sont particulièrement propres à servir de masses adhésives pour former le cordon 3. Le système adhésif est constitué d'un primaire ou promoteur d'adhérence en polyuréthane déposé en couche mince à la surface du verre ou du masque 2, puis de la masse adhésive de polyuréthane proprement dite, déposée sur la couche primaire.

Dans le cas représenté sur la figure 1 on dépose sur le masque 2 une couche de primaire 6 dont la largeur b, couvrant environ 5 mm, est sensiblement plus faible que celle du cordon. Le cordon 3 est aussitôt déposé sur cette couche de primaire à l'aide d'une buse d'extrusion. On pose en même temps le fil de coupe 7 qui vient reposer le long du bord de la couche de primaire 6, sur celle-ci ou juste à côté. Le dépôt du cordon 3 et du fil 7 se fait à l'aide de dispositifs tels que décrits dans la publication de brevet DE-A-3 409 903 ou EP-A-0 121 480.

De part et d'autre de la couche de primaire 6 la masse adhésive formant le cordon 3 n'adhère que très peu à la surface du verre ou du masque 2. Le cordon 3 n'a donc besoin d'être tranché par le fil 7 que dans la zone qui se trouve au droit de cette couche de primaire, c'est-à-dire sur une largeur de l'ordre de 5 mm seulement.

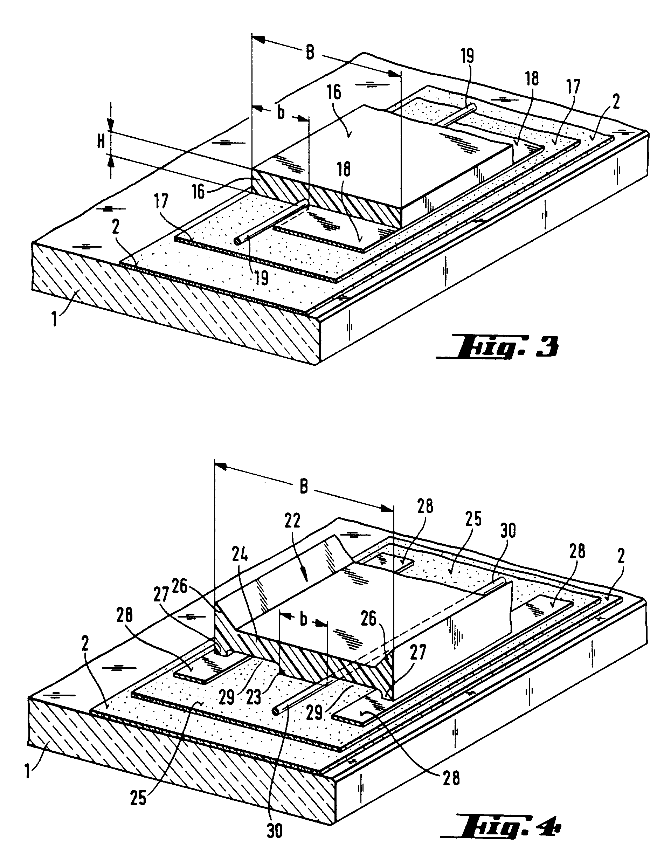

Le mode de construction représenté à la figure 2 a encore trait à un vitrage 1 sur lequel est déposé un cordon 10 qui possède mêmes dimensions et même profil que le cordon 3 décrit plus haut. Cette fois-ci encore, l'adhésion au verre du vitrage 1 ou à son masque 2 ne se produit que dans une zone étroite de largeur b et non sur les bords de cette zone. Pour obtenir cette différence d'adhérence, on dépose tout d'abord une couche de primaire 11 puis, après séchage ou durcissement de celle-ci, un anti-adhésif ou séparateur, sous forme de deux bandes 12 d'espacement relatif b. Des solutions de cires micro-cristallines ou des produits à base de paraffine, des huiles de silicone ou la méthylcellulose en milieu aqueux peuvent par exemple servir d'anti-adhésif. Le fil de coupe 13 est à nouveau posé sur la face du vitrage en même temps que le cordon 10, au bord de l'une des deux bandes anti-adhésives 12, toujours à l'aide d'un dispositif tel que décrit dans la publication DE-A-3 409 903 ou EP-A-0 121 480.

La figure 3 montre une forme d'exécution dans laquelle le cordon 16 servant d'entretoise ne possède aucun rebord latéral de retenue de la colle mais a simplement une section rectangulaire ou sensiblement rectangulaire. Ce cordon 16 a de nouveau une largeur B de 20 mm. Son épaisseur H va de 2 à 5 mm. Sur le masque 2 est de nouveau déposée une couche de primaire 17, en partie recouverte d'une couche 18 anti-adhésive, de sorte que l'adhésion de la masse formant le cordon 16 sur le vitrage 1 ne se produit que sur une bande étroite d'une largeur b de l'ordre de 5 mm. Dans le cas présent, ce n'est pas dans son milieu que le cordon adhère au vitrage mais sur le côté. Le fil de coupe 19 est encore posé sur la face du vitrage au cours de l'extrusion du cordon 16.

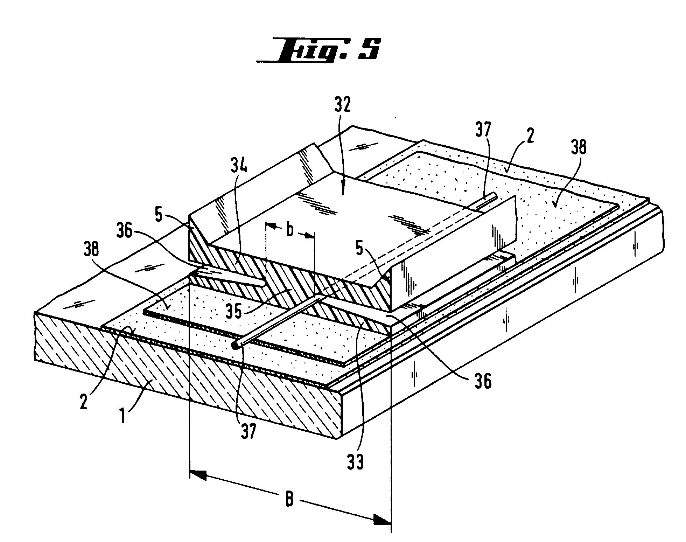

La figure 4 montre un mode d'exécution selon lequel le cordon 22 a une section sensiblement en forme de T constituée d'une semelle verticale médiane 23 et d'une table horizontale 24. L'adhésion sur le vitrage 1 ne se produit que par l'intermédiaire de la semelle 23, sur une largeur b de l'ordre de 6 mm du masque 2 où est déposée une couche de primaire 25. La table 24 a une largeur B de l'ordre de 20 mm ; elle présente à ses extrémités, vers le haut, pour retenir la colle, des rebords 26 sensiblement verticaux et vers le bas c'est-à-dire en direction du vitrage, des saillies ou bourrelets 27. Une couche anti-adhésive 28 est déposée sur le vitrage 1 ou son masque 2 au droit de ces bourrelets 27. Ceux-ci portent sur la face du vitrage mais la couche anti-adhésive 28 empêche qu'ils n'y adhèrent. Des fentes à l'air libre 29 existent donc entre la table 24 et la face du vitrage le long de la semelle 23. Après durcissement du cordon, on fera pénétrer le fil de coupe 30 dans l'une d'elles en le faisant glisser à la surface du verre sous les bourrelets 27.

Enfin la figure 5 montre un exemple de mise en oeuvre relatif à un cordon 32 dont la portée de collage et la portée de liaison au vitrage ont sensiblement la même largeur. Entre la semelle 33 et la table supérieure 34 le cordon présente un rétrécissement transversal qui ne laisse subsister entre elles qu'un pédoncule de jonction médian 35 de largeur b. Les fentes latérales 36 peuvent éventuellement être remplies d'un matériau possédant une adhérence nulle ou seulement très faible à celui du cordon 32, par exemple par co-extrusion en même temps que le cordon 32. Le fil de coupe 37 est placé à l'intérieur de l'une des fentes 36 ; si celle-ci n'est pas remplie, il peut être mis en place après durcissement du cordon 32. La couche de primaire usuelle 38 est déposée sur le masque 2 pour améliorer l'adhérence.

Bien entendu, les deux extrémités du fil de coupe sont toujours conduites à travers le cordon, à un emplacement donné, de façon à aboutir de l'autre côté de la zone assurant sur celui-ci la jonction entre carrosserie et vitrage et peuvent, à partir de là, être tirées transversalement. On peut employer un fil métallique ou non, simple ou constitué de fibres coordonnées.

## Revendications

1. Vitrage automobile préparé en vue de son collage dans la feuillure d'une baie de la carrosserie, combinant le long de son bord un cordon (3,10,16,22,32) de profil calibré déposé par extrusion d'une masse adhésive et servant d'intercalaire entre le vitrage et le ruban de colle (8) utilisé pour le fixer au montage, avec un fil (7,13,19,30,37) ou cordonnet flexible de haute résistance à la rupture, disposé à l'intérieur du cordon ou à son voisinage immédiat pour trancher celui-ci dans le sens de sa largeur lors d'un démontage du vitrage, caractérisé en ce que la largeur du cordon (3,10,16,22,32) dans la zone où porte le ruban de colle (8) correspond à la section de ce ruban pour éviter que la colle ne déborde, mais que la zone à trancher par le fil a une largeur sensiblement moindre par rapport à la précédente largeur.

2. Vitrage selon la revendication 1, caractérisé en ce que le plan de découpe à travers la section du cordon (3, 10, 16, 22) à trancher par le fil de coupe (7, 13, 19, 30) se trouve directement sur la zone d'adhérence au vitrage 1.

3. Vitrage selon la revendication 2, caractérisé en ce que le cordon (3, 10, 16) se trouve au contact de la surface du vitrage sur toute sa largeur mais n'y adhère cependant que sur une partie de celle-ci.

4. Vitrage selon la revendication 3, caractérisé en ce qu'un promoteur d'adhérence (6, 11, 17) est déposé dans la largeur du cordon (3, 10, 16), sur la zone d'adhérence au vitrage 1.

5. Vitrage selon l'une des revendication 3 ou 4, caractérisé en ce qu'une couche (12, 18) d'un anti-adhésif est disposée sur une partie de la surface du vitrage (1), ne lui laissant qu'une adhérence nulle ou seulement faible au cordon (10, 16).

6. Vitrage selon l'une des revendications 1 ou 2, caractérisé en ce que les zones du cordon (22) qui ne présentent aucune adhérence au vitrage (1) sont séparées de la surface du verre par un vide d'air constitué par une fente (29).

7. Vitrage selon la revendication 6, caractérisé en ce que le profilé présente une section sensiblement en forme de T dont la membrure verticale constitueé par une semelle (23) adhère au vitrage (1) mais dont la table transversale (24) en est séparée par un vide d'air (30, 29).

8. Vitrage selon la revendication 7, caractérisé en ce que la table (24) possède à ses extrémités des saillies (27) dirigées vers le vitrage.

9. Vitrage selon l'une des revendications 2 à 8, caractérisé en ce que le fil de coupe (7, 13, 19, 30) est placé au contact immédiat de la surface du verre.

10. Vitrage selon la revendication 1, caractérisé en ce que la section du cordon (32) à trancher par le fil de coupe (37) est le pédoncule de jonction (35) entre la zone supérieure (34) formant portée de collage et une semelle (33) du cordon (32) formant portée de liaison au vitrage.

11. Vitrage selon l'une au moins des revendications 1 à 10, caractérisé en ce qu'un dépôt (2) opaque à la lumière et à l'ultra-violet, en particulier constitué d'un émail fusible, est déposé sous le cordon (3, 10, 16, 22, 32) à la surface du vitrage.

12. Vitrage selon l'une au moins des revendications 1 à 11, caractérisé en ce que le cordon (3, 10, 22, 32) possède des rebords latéraux (5) de retenue du ruban de colle de fixation (8).

13. Procédé de fabrication d'un vitrage selon l'une des revendications 6 à 12, caractérisé en ce que le fil de coupe (30, 37) est inséré après durcissement du cordon (22, 32) dans la fente (29, 36) prévue à cette intention.

## Claims

1. Automobile pane, prepared for the purpose of being glued into the fold of an opening of the bodywork, combining along its edge a cord (3, 10, 16, 22, 32) of calibrated profile deposited by extrusion of an adhesive mass and serving as intermediate member between the pane and the strip of adhesive (8) used for fixing it on installation, with a flexible wire (7, 13, 19, 30, 37) or thread of high tensile strength disposed inside the cord or in its immediate vicinity for cutting the cord in the direction of its width when the pane is to be removed, characterized in that the width of the cord (3, 10, 16, 22, 32) in the zone against which the adhesive strip (8) bears corresponds to the section of this strip so as to prevent the adhesive from spilling over, but that the zone to be cut by the wire has a substantially smaller width than the former.

2. Pane according to Claim 1, characterized in that the cutting plane through the section of the cord (3, 10, 16, 22) to be cut by the cutting wire (7, 13, 19, 30) is situated directly on the bonding zone to the pane (1).

3. Pane according to Claim 2, characterized in that the cord (3, 10, 16) is in contact with the surface of the pane over its entire width but adheres to it only over a portion of this width.

4. Pane according to Claim 3, characterized in that a primer (6, 11, 17) is deposited in the width of the cord (3, 10, 16) over the bond zone with the pane (1).

5. Pane according to one of Claims 3 or 4, characterized in that a layer (12, 18) of an antiadhesive is disposed over a portion of the surface of the pane (1), allowing to it only a zero or very small adhesion to the cord (10, 16).

6. Pane according to one of Claims 1 or 2, characterized in that the zones of the cord (22) which do not have any adhesion to the pane (1) are separated from the surface of the glass by an air gap formed by a slot (29).

7. Pane according to Claim 6, characterized in that the cord has a section substantially of T-shape, of which the vertical member formed of a footing (23) adheres to the pane (1), but of which the transverse table (24) is separated from the pane by an air gap (30, 29).

8. Pane according to Claim 7, characterized in that the table (24) possesses, at its ends, projections (27) orientated towards the pane.

9. Pane according to one of Claims 2 to 8, characterized in that the cutting wire (7, 13, 19, 30) is placed in immediate contact with the surface of the glass.

10. Pane according to Claim 1, characterized in that the section of the cord (32) to be cut by the cutting wire (37) is the connecting stem (35) between the upper zone (34) forming the glue bearing area and a footing (33) of the cord (32) forming the bonding bearing area to the pane.

11. Pane according to at least one of Claims 1 to 10, characterized in that a deposit (2), opaque to light and ultra-violet radiation, in particular formed of a fusible enamel, is deposited beneath the cord (3, 10, 16, 22, 32) on the surface of the pane.

12. Pane according to at least one of Claism 1 to 11, characterized in that the cord (3, 10, 22, 32) possesses lateral flanges (5) for retaining the fixing adhesive strip (8).

13. Process for the production of a pane according to one of Claims 6 to 12, characterized in that the cutting wire (30, 37) is inserted after hardening of the cord (22, 32) into the slot (29, 36) provided for this purpose.

## Patentansprüche

1. Für die Verklebung mit dem Fensterrahmen der Karosserie vorbereitete Autoglasscheibe, mit einem entlang dem Scheibenrand angeordneten, durch Extrusion einer Klebemasse aufgebrachten, einen kalibrierten Querschnitt aufweisenden und einen Zwischenkörper zwischen der Glasscheibe und der den Montagekleber bildenden Kleberaupe (8) dienenden Profilstrang (3,10,16,22,32) mit kalibriertem Querschnitt sowie mit einem innerhalb oder unmittelbar neben dem Profilstrang angeordneten Draht (7,13,19,30,37) oder einer flexiblen Schnur mit hoher Reißfestigkeit zum Durchtrennen des Profilstrangs in Richtung seiner Breite beim Ausbauen der Glasscheibe, **dadurch gekennzeichnet,** daß die Breite des Profilstrangs (3,10,16,22,32) in dem die Kleberaupe (8) tragenden Bereich dem Querschnitt dieser Kleberaupe entspricht, um ein seitliches Überquellen des Klebers zu vermeiden, daß jedoch der durch den Draht zu durchtrennende Abschnitt eine bezogen auf die voraufgehend genannte Breite wesentlich geringere Breite aufweist.

2. Glasscheibe nach Anspruch 1, dadurch gekennzeichnet, daß die Trennebene durch den von der Trennschnur (7,13,19,30) zu durchtrennenden Abschnitt des Profilstrangs (3,10,16,22) sich unmittelbar auf der Haftzone auf der Glasscheibe (1) befindet.

3. Glasscheibe nach Anspruch 2, dadurch gekennzeichnet, daß der Profilstrang (3,10,16) auf seiner ganzen Breite mit der Oberfläche der Glasscheibe in Kontakt steht, jedoch die Klebeverbindung nur auf einem Teil dieser Breite gegeben ist.

4. Glasscheibe nach Anspruch 3, dadurch gekennzeichnet, daß ein Haftvermittler (6,11,17) auf der die Klebeverbindung mit der Glasscheibe (1) herstellenden Zone innerhalb der Breite des Profilstrangs (3,10,16) angeordnet ist.

5. Glasscheibe nach einem Ansprüche 3 oder 4, dadurch gekennzeichnet, daß eine Schicht (12,18) eines Anti-Haftmittels auf einem Teil der Oberfläche der Glasscheibe (1) angeordnet ist, die keine oder eine nur geringe Haftung an dem Profilstrang (10,16) aufweist.

6. Glasscheibe nach einem der Ansprüche 1 oder 2, dadurch gekennzeichnet, daß diejenigen Abschnitte des Profilstrangs (22), die keine Haftung zur Glasscheibe (1) aufweisen, von der Oberfläche der Glasscheibe durch von einem Spalt (29) gebildeten Luftabstand getrennt sind.

7. Glasscheibe nach Anspruch 6, dadurch gekennzeichnet, daß der Profilstrang einen im wesentlichen in T-Form ausgebildeten Querschnitt aufweist, dessen aus einem Fußteil (23) bestehender vertikaler Steg an der Glasscheibe (1) haftet, dessen Quersteg (24) jedoch durch einen Luftspalt (29) von der Glasoberfläche getrennt ist.

8. Glasscheibe nach Anspruch 7, dadurch gekennzeichnet, daß der Quersteg (24) an seinen Enden gegen die Glasscheibe gerichtete Vorsprünge (27) besitzt.

9. Glassscheibe nach einem der Ansprüche 2 bis 8, dadurch gekennzeichnet, daß die Trennschnur (7,13,19,30) in unmittelbarem Kontakt mit der Glasoberfläche steht.

10. Glasscheibe nach Anspruch 1, dadurch gekennzeichnet, daß der von der Trennschnur (37) zu durchtrennende Abschnitt des Profilstrangs (32) der Verbindungssteg (35) zwischen dem die Tragfläche für die Verklebung bildenden oberen Teil (34) und einem die Verbindungsfläche zur Glasscheibe bildenden Fußteil (33) des Profilstrangs (32) ist.

11. Glasscheibe nach wenigstens einem der Ansprüche 1 bis 10, dadurch gekennzeichnet, daß auf der Oberfläche der Glasscheibe unterhalb des Profilstrangs (3,10,16,22,32) ein für das Licht und die Ultraviolett-Strahlung undurchlässiger Belag (2), insbesondere aus einer Einbrennfarbe, angeordnet ist.

12. Glasscheibe nach wenigstens einem der Ansprüche 1 bis 11, dadurch gekennzeichnet, daß der Profilstrang (3,10,22,32) seitliche Begrenzungsstege (5) für die Kleberaupe (8) aufweist.

13. Verfahren zur Herstellung einer Glasscheibe nach einem der Ansprüche 6 bis 12, dadurch gekennzeichnet, daß die Trennschnur (30,37) nach dem Aushärten des Profilstrangs (22,32) in den hierfür vorgesehenen Spalt (29,36) eingelegt wird.
